# EUROPEAN PATENT APPLICATION

(11) **EP 4 837 689 A1**
(43) Date of publication of application: **11.11.2026**
(21) Application number: 26176002.9
(22) Date of filing: 30.04.2026
(51) Int. Cl.: B23K 26/00, B23K 26/22, B23K 26/082

(54) **HANDHELD LASER WELDING SYSTEMS FOR SPOT WELDING**

(30) Priority: 05.05.2025 US 202563800119 P; 28.04.2026 US 202619660658
(71) Applicant: Illinois Tool Works Inc., Glenview IL 60025 (US)
(72) Inventor: LIU, Shuang, Glenview, 60025 (US); ALBRECHT, Bruce Patrick, Glenview, 60025 (US); HOLVERSON, Todd Earl, Glenview, 60025 (US)
(74) Representative: HGF

(57) **Abstract**

Systems and methods for laser welding are disclosed. A laser welding system includes a handheld or robotic laser welding tool to direct laser power to a workpiece to generate a weld during a laser welding operation. The welding system includes a wobble generator (e.g., a beam wobble optic, a wire guide optic, and/or a mechanical controller/oscillator) to move the laser beam and/or the wire as applied to the workpiece.

## Description

### CLAIM OF PRIORITY

This patent application claims priority to and claims benefit from United States Provisional Patent Application Serial No. 63/800,119, filed on May 5, 2025. The above identified application is hereby incorporated herein by reference in its entirety.

### BACKGROUND

Welding is a process that has historically been a cost effective joining method. Welding is, at its core, a way of bonding two pieces of parent material. Laser welding is a welding technique used to join multiple pieces of metal through the use of a laser. The laser beam provides a concentrated heat source, enabling a precise control of the heat input and high welding speed, creating a weld with low heat input, and a small heat affected zone. In various applications, filler metal may be needed for different purposes such as filling a gap between workpieces, reinforcing the joint, overlaying a substrate surface, building up an object, or acting as a buffering medium.

Conventional laser-based welding tools can create challenges for new users, especially for manually operated laser welders. Even welders with long experience with arc-related welding systems may be unfamiliar with the peculiarities of a laser welding system, including how to achieve a quality spot weld. Thus, systems and/or methods that facilitate welding from laser based welding systems with laser control features are desirable.

### BRIEF SUMMARY

Aspects of the present disclosure relate to welding solutions. More specifically, various implementations in accordance with the present disclosure relate generally to laser welding systems, methods, and apparatuses. More particularly, this disclosure relates to manually operated laser welding systems and torches, which may employ one or more optics (e.g., wobble generators and/or beam expanding optics) to perform spot welding, substantially as illustrated by and described in connection with at least one of the figures, as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

FIG. 1 illustrates an example laser type welding system, in accordance with aspects of this disclosure.
FIG. 2 illustrates an example handheld laser welding tool employing a beam expanding optic, in accordance with aspects of this disclosure.
FIGS. 3A and 3B illustrate example handheld laser welding tools, in accordance with aspects of this disclosure.
FIGS. 4A to 4C illustrate example laser beam wobble patterns, in accordance with aspects of this disclosure.
FIGS. 5A to 5C illustrate example laser beam power distribution patterns, in accordance with aspects of this disclosure.

### DETAILED DESCRIPTION

Disclosed example systems and methods for laser welding are provided. In particular, disclosed example laser welding systems include a manually operated laser welding torch to direct laser power to a workpiece to create a spot weld during a laser welding operation. The welding system includes a nozzle and/or nozzle extender to fix a position of the torch relative to the workpiece. A beam wobble pattern is applied to the workpiece within a predetermined area about a wobble axis, with the wobble pattern designed to distribute the heat from the laser beam within the predetermined area.

Laser welding systems, in comparison to traditional electric arc welding systems, provide a high intensity laser beam directed to a relatively small cross sectional area of the workpiece (e.g., a focal point or spot, which may be approximately 1 mm in diameter). This high intensity laser beam provides energy sufficient to heat the material (e.g., a metallic workpiece and/or filler wire) and provide welding. However, the small area of the focal point is useful in a variety of welding situations, but is not without disadvantages.

An advantage of employing a small spot size is the laser beam can be scanned with high speed and accuracy, which is effective for welding thinner materials, for example. The aesthetic appearance of such a finished weld can also be desirable for laser welding applications.

Of the many welding operations that can be performed by handheld laser welding tools, spot welding may yield particular improvements. Spot welding is a method of joining metal sheets by applying pressure and passing an electric current through them, creating a small, localized weld. This process generates heat due to the metal's resistance to the current, melting the metal at the contact points and forming a weld nugget. An example process for spot welding is resistance welding, where heat is generated by the resistance of the metal to the electrical current. Other types of spot welding include use of electrodes to concentrate a high current into a small area at a junction of two workpieces, which can provide a tight connection between workpieces. Heat generation spot welding uses resistance to create high heat, thereby melting the metal at the interface between the two workpieces. Spot welding is often a quick, low power solution for bonding two workpieces together, and is thus used in a variety of environments and industries, including automotive, aerospace, and manufacturing.

With respect to handheld laser welding, performance of spot welding may have particular challenges. For example, due to the small spot size (which often yields advantages over conventional welding processes), the melt area for handheld laser welding may be smaller than resistance spot welding with conventional torches. The smaller spot size may be expanded or otherwise mitigated in robotic laser spot welding, as the robot welder can quickly, accurately, and, in coordination with the laser controller, apply laser beams that follow a pattern, wobble or shape (e.g., a circle, spiral, line, etc.) to increase the melt area to enhance the strength of the laser weld (e.g., to match or exceed the strength of a resistance spot weld).

Due to differences in design and operation between robotic laser welders and some handheld laser welding systems, however, scanning may be limited in the shapes and/or patterns available. Thus, disclosed handheld laser welding systems include a wobble feature, similar to those described with respect to robotic laser welders. For example, wobble pattern control can be provided by a (movable) mirror that scans the laser back and forth quickly and over a small area (e.g., a few millimeters).

By applying the laser beam in accordance with wobble and/or pattern control, the handheld laser welding system can apply the laser beam to create a wide variety of geometric shapes (e.g., circle, spiral, ring, triangle, square, rectangle, figure-8, any polygon, etc.) in a variety of sizes. With this added motion, power from the laser beam is distributed over a wider area, which will create a bigger melt area (e.g., a weld nugget).

In some examples, the wobble/pattern is applied about a wobble axis. The wobble axis can be a point on the workpiece and/or an extension of an axis through a portion of the handheld laser welding torch (e.g., along the neck/nozzle of the torch). In some examples, with the enhanced scanning capabilities, the spot weld can be performed over a longer period of time, which further adds heat to the weld, increasing penetration. For instance, with the laser beam, nozzle and/or welding torch being in a fixed position relative to the wobble axis, the pattern can be applied in the desired pattern.

As a response, specific controls to the laser beam application (e.g., laser beam power, frequency, scanning pattern, wobble, etc.) and/or slowing the travel of the torch to allow the heat from the laser beam to penetrate the workpiece(s) and spread in a desired manner.

Some existing laser systems provide a laser scanning technology whereby the laser is scanned across a surface of the workpiece and/or filler wire, such as by pivoting side-to-side and/or in circles (or some other geometric shape), for example. Although this may improve heat spreading, for handheld laser welding systems, it may be challenging to maintain a wobble/scanning axis while performing a spot weld, which may impact heat application and depth penetration. Hence, there is a need to provide an improved handheld laser system that spreads and/or distributes the heat of the laser beam as a spot weld within a predetermined area on the workpiece.

In some examples, heat at the predetermined area can be controlled dynamically during a spot welding operation. That is, the power profile of the laser beam (or laser beams) would compensate for movement of the laser; such as a dwelling of the laser over a particular portion of the predetermined area as the laser controller commands scanning of the laser beam during spot welding. Accordingly, scanning of the laser beam can be slowed down (and/or power increased) at locations where the laser beam will traverse less frequently, and be sped up (and/or power decreased) at locations where the laser beam will traverse often.

Advantageously, use of the wobble pattern control would have significant benefits for laser welding systems to perform spot welding operations. In practice, by controlling application of the laser beam about a wobble axis, heat from the laser beam will be balanced.

As used herein, the word "exemplary" means serving as an example, instance, or illustration. The examples described herein are not limiting, but rather are exemplary only. It should be understood that the described examples are not necessarily to be construed as preferred or advantageous over other examples. Moreover, the term "examples" does not require that all examples of the disclosure include the discussed feature, advantage, or mode of operation.

As used herein, a wire-fed welding-type system refers to a system capable of performing welding (e.g., gas metal arc welding (GMAW), gas tungsten arc welding (GTAW), etc.), brazing, cladding, hardfacing, and/or other processes, in which a filler metal is provided by a wire that is fed to a location on the workpiece, such as an arc, a laser beam, or weld puddle.

As used herein, the term "welding-type operation" includes a welding operation employing a laser welding systems using laser energy, operable to fuse, bind, and/or cut one or more materials and/or layers of materials.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, laser beam scanning, laser beam scanning profile, laser scanning profile, or scanning profile, and/or wobble refers to one or more of control of the shape (e.g., common geometric shapes, a rectangle, a triangle, a loop, a circle, a zig-zag, V-shape, a U-shape, a figure-8, etc.), size (e.g., width and/or length), power distribution (e.g., bell curve, ramping up or down, favor one side over the other or center), scanning speed (e.g., over entire scan and/or over discrete portions of the scan), and/or pulse frequency (e.g., over entire scan and/or over discrete portions of the scan) of the laser power on the workpiece and/or the filler material, and any combination thereof.

As used herein, beam expanding optics, which may include beam spreading and/or beam shaping optics, are optical devices that take a beam of light and increase the spot size (e.g., diameter, width) of the laser beam incident on a surface (e.g., of a workpiece). In some examples, laser beam expanding optics increase the diameter of a collimated input beam to a larger collimated output beam. The output beam provides an amount of energy similar to the input beam over an increased area. The output beam may be controlled to scan a desired pattern, and/or output as a series of pulses at a desired frequency.

For the purpose of promoting an understanding of the principles of the claimed technology and presenting its currently understood best mode of operation, reference will be now made to the examples illustrated in the drawings, and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

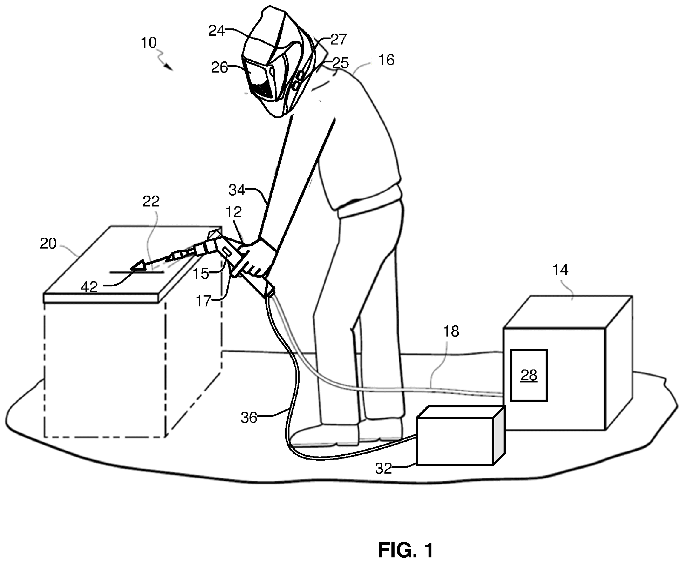

Turning to the figures, FIG. 1 provides a schematic diagram of an example laser welding system 10. The example laser welding system 10 of FIG. 1 includes a laser welding power supply 14, a laser power source 28, a laser controller 30, and a wire feeder 32. A laser welding torch 12 is connected to the power supply 14 via power cable 18, and receives wire 36 from the wire feeder 32.

The laser source 28 generates welding-type laser power 42 (e.g., directed light energy) based on input power received from the power supply 14. The laser source 28 may be a light emitting a CO2 laser, Nd:YAG laser, diode-type laser, fiber laser, disk laser or any other type of laser generator. As used herein, welding-type lasing power refers to laser power having wavelength(s) that are suitable for delivering energy to metal for welding, cutting, and/or cladding.

An operator 16 can wear one or more of a wearable 34 (such as a glove, a smartwatch, etc.) and/or a helmet 24. In some examples, the helmet 24 includes a screen 26, which may be configured to automatically dim when exposed to intense light, may be a filter for one or more wavelengths, and/or may be connected to another part of the system (e.g., controller 30). This allows the screen 26 to present information to the operator 16 to inform the welding process. In some examples, a helmet can include an auto-darkening filter (ADF). The filter may block and/or respond to specific wavelengths associated with laser welding, for instance, to darken the view screen. The filtering feature can also be applied to goggles and/or glasses.

In some examples, within the helmet, goggles, and/or glasses, a screen can be within view of the user, providing the view of a camera. This can be limited to the view from the camera, or may provide an augmented reality (AR) and/or virtual reality (VR) image. In some examples, the helmet 24 may include a sensor 27 (e.g., a heat sensor, a light sensor, an inertial measurement unit (IMU), an accelerometer, etc.) and/or a camera 25 (e.g., optical camera, infrared (IR) camera, etc.).

The torch 12 focuses the laser power 42 at a joint or weld 22 on a workpiece 20. The laser power 42 heats the workpiece 20 to generate a puddle during welding operations. The wire feeder 32 feeds the wire 36 (e.g., filler wire, cladding material, metal additive) to the puddle generated by the laser power 42. The wire 36 melts into the puddle in the weld 22. The wire 36 may be fed from a wire supply, such as a wire reel or wire supply drum, and may be conveyed through a cable or other suitable conduit.

During a welding process, the laser controller 30 controls a focal point of the laser beam to wobble in one or more axes as applied to the workpiece 20. By moving the focal point in multiple directions, the laser beam can induce one or more beneficial effects in the weld. Examples of such beneficial effects that can be induced in the lateral direction(s) include agitating or stirring of the puddle laterally (including in patterns) to improve filler mixing, creating a heat gradient in the puddle in at least a partially lateral direction to induce movement and improve puddle wetting, and/or controlling the heating and/or cooling rates of the puddle in at least a partially lateral direction by controlling where heat is concentrated.

In some examples, movement of the focal point of the laser beam is controlled such that side-to-side motion is variable, random, and/or has multiple changing directions, angles, and/or lengths. For instance, side-to-side movement of the focal point may promote gap filling, wetting at the toes of a workpiece, etc., and may be set to a high wobble frequency (e.g., greater than 100 wobbles/movements per second). An additional, possibly independently controlled forward-backward motion at a lower wobble frequency could be used to result in a substantially rippled appearance, similar to a traditional ripple look of tungsten inert gas (TIG) welds, and/or other desirable characteristics. As disclosed herein, wobble can be implemented on a wire as well as the laser beam to further enhance the quality and appearance of the weld bead.

In some examples, the wire feeder 32 can be fitted with one or more devices to control lateral movements of the wire 36, in addition to forward or backward movement thereof. For instance, the wire 36 may be channeled to the workpiece 20 and experience a force (e.g., from an actuator, barrier, a mechanical biasing element, etc.) which causes the wire 36 to move in a lateral pattern, circular motion, or other movement. In examples, patterned movement of the wire 36 can be controlled to sync with and/or complement the application of the laser beam 42. This can include applying a portion of the laser beam over the wire prior to the wire entering a weld bead (e.g., for preheating) and/or scanning the laser beam in a pattern, then controlling the wire to follow the pattern to enhance deposition rates and/or travel speed.

In some examples, a preheating device 15 (e.g., a resistive and/or inductive heater) is employed at or near the laser welding torch 12. Employing preheating can lower the amount of laser energy required to perform a weld, and/or increase the speed and/or amount of wire applied to a given weld. The preheating device 15 may include one or more sensors to gauge a temperature and/or enthalpy of the wire and/or workpiece. In some examples, the preheating device 15 includes and/or is operationally connected to an auxiliary switch (e.g., an arc clamp) to divert a portion of electrical current from the wire. In other words, if the laser welding system 10 senses an arc forming between the wire 42 and a surface of the torch (e.g., nozzle, neck, etc.) and/or the workpiece 20 during a laser welding operation, the auxiliary switch can close a circuit to direct current away from the wire to avoid arcing between the wire and a metallic surface.

The laser beam 42 can be controlled in any desired pattern, which may include, but is not limited to, a pattern with one or more straight lines and/or one or more curves. In some embodiments, the desired pattern may include a pause or break in the pattern, such as a time interval in which the focal point does not move. The desired pattern may include a circle, an ellipse, a zigzag, a figure 8, a transverse reciprocating line, a crescent, a triangle, a square, a rectangle, a non-linear pattern, an asymmetrical pattern, a pause, or any combination thereof. As may be appreciated, a pattern or a combination of patterns may be used and optimized for particular welds and/or welding positions. The movement of the focal point and the relative movement between the workpiece 20 and the laser welding torch 12 causes the focal point to trace a superimposed pattern over the workpiece 20. The example pattern may be traced by the laser beam 42 to agitate the puddle.

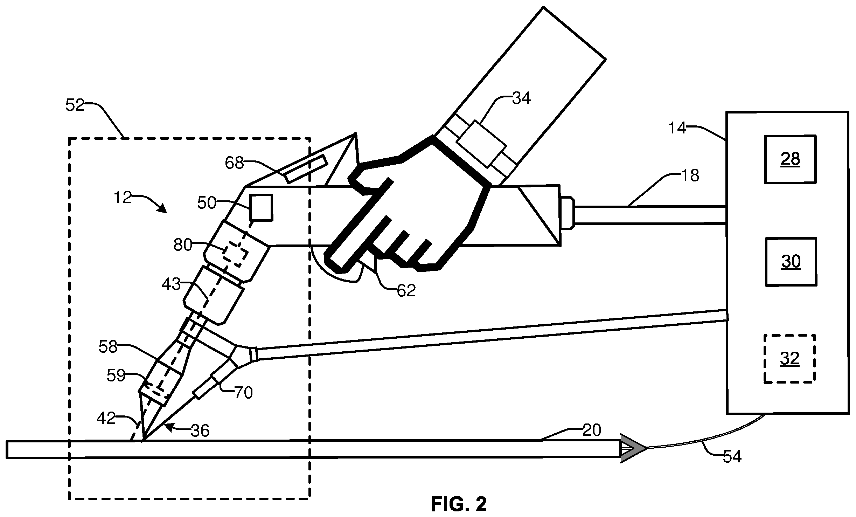

In some disclosed examples, a laser welding system may employ one or more lasers or laser beams to join multiple workpieces and/or create an object via additive manufacturing techniques. In some examples and shown in FIG. 2, a handheld laser tool 12 directs a laser beam 42 to focus on a location of the workpiece 20. This focal point may correspond to a joint to be welded, but may also result in the laser scanning in one or more patterns, such as near, over and/or about welding wire 36. In some examples, application of the laser beam is configured for cleaning a workpiece, with energy and focal spot settings selected for such an application.

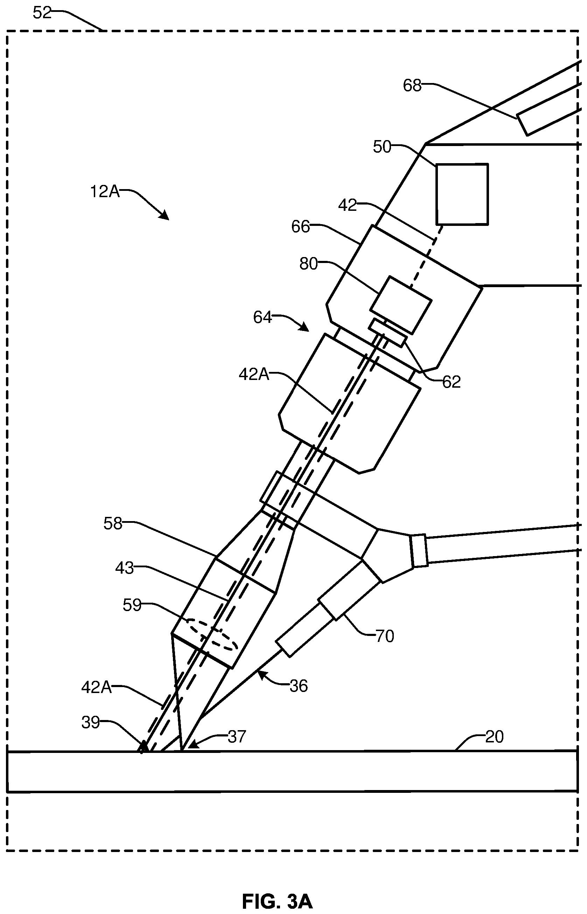

This disclosure introduces a beam control system and method for performing spot welding with the handheld laser welding torch 12. In particular, as shown in FIG. 2, an axis 43 (a wobble axis) may extend through a portion of the torch 12 (e.g., the neck 64 and/or nozzle 58) and meet the workpiece 20 at a common point 39 (as shown in FIG. 3A). In some examples, the welding wire 36 may meet the workpiece 20 at the common point on the workpiece, along with the laser beam 42. In some examples, the laser beam is delivered through the neck 64 with a shared axis as the wobble axis 43, or is coaxial with the wobble axis (e.g., for split laser beams, moving beams, etc.).

In some examples, the laser generator 28 creates the laser beam 42, which is introduced to the laser welding torch 12 via one or more fiber optics, and delivered to one or more optics 50 within the torch. The beam from the laser generator 28 can be transmitted to a beam controlling optic 80 (e.g., beam spreading, beam shaping, wobble/pattern control, etc.) to control the laser beam at the workpiece to affect a spot weld at the workpiece 20. Control of the laser beam can include movement of the beam, expanding the beam, diffusing the beam, and/or splitting the beam into two or more laser beams for application to the workpiece 20 (e.g., via a filter, a mirror, a lens, a diffraction grating, a gradient index lens, etc.).

In some examples, the welding wire, or filler material, 36 advances to the workpiece 20 via a tube or channel 70 from a wire feeder 32 (which may be a standalone accessory, or may be incorporated with the laser power supply 14). Although shown being delivered via tube 70, in some examples the wire can be fed through the center of the nozzle 58 (e.g., coaxially), such that the laser beam 42 and the welding wire 36 contact the workpiece and/or the weld bead within a small radius.

In some examples shown in FIG. 2, the handheld laser tool 12 directs one or more laser beams 42 to contact the workpiece 20. The tube or channel 70 guides welding wire 36 to the workpiece 20 from one or more angles. As shown, the tube 70 can be external to the tool 12, and can be attached, mounted, and/or integrated with the tool 12. In some examples, the tube 70 can be configured such that the wire 36 contacts the workpiece 20 in a way that assists the operator with moving the torch along at a steady and consistent travel speed.

FIG. 3A illustrates a detailed view of area 52 identified in FIG. 2. As shown, the laser welding torch 12A (similar to torch 12) includes the optic 80 to receive the laser beam 42 from the laser source 30 via optic 50 to perform a welding operation. The handheld laser welding torch 12A directs the laser power to the workpiece 20 as a laser beam. In some disclosed examples, the nozzle makes contact with the workpiece at point 37. This serves to fix a position of the torch 12A and/or wobble axis 43 relative to the workpiece, thereby ensuring the laser beam 42/42A is focused at a fixed point 39 on the workpiece. This allows the laser controller to perform a spot welding operation over a period of time, with relative stability provided by fixing the position of the torch and the workpiece. This can include controlling application of the laser beam in a wobble pattern, within a predetermined area (e.g., an area measured from the fixed point 39). The wobble pattern can then be applied for a given duration as needed for a desired spot weld, while the power from the laser beam is concentrated within the predetermined area.

In addition to scanning in particular wobble patterns during spot welding, improvements to inconsistent penetration can be achieved by making the laser beam wider. Typically, the beam spot size is quite small (e.g., less than 1 mm). In an additional or alternative example, the optic 80 can be configured as a beam expanding optic, such that a focal point of the laser beam 42 is widened or increased (e.g., a diameter or area) to form an expanded output beam 42A for application to the workpiece 20. By making a wider beam or intentionally defocusing the beam, the wider spot size will distribute the heat across a wider area and make for a wider and more consistent penetration profile.

In examples, the beam controlling optic 80 is a single lens configured to fully or partially expand a size or shape of the focal point of the laser beam. In some examples, the optic 80 includes one or more of a convex lens, a concave lens, a mirror, diffraction grating, a gradient index lens, and/or a prism. In some examples, the handheld laser welding torch 12A includes a collimating lens 62 to structure the laser beam. The collimating lens 62 may be included with the optic 80 and/or along an optical path of the output laser beam 42A.

As shown, the beam controlling optic 80 is located within a coupling portion 66 of a torch neck 64. In examples, the optic 80 is integrated with the neck 64, whereas in other examples the optic 80 is removable. For example, the beam controlling optic 80 can be mounted within the coupling 66 and removably attached to the handheld laser welding torch 12A.

In some examples, the beam controlling optic 80 includes first and second lenses to control a wobble pattern of, expand, and/or shape the laser beam 42. For instance, the first lens may be movable relative to the second lens (e.g., via manual rotation, by control from a user interface and movement by a motor or actuator), which serves to adjust a size or shape of the output laser beam 42A applied to the workpiece. The first and second lenses may be separated by an adjustable distance, which changes the diameter of the laser spot on the workpiece.

In some examples, the laser welding torch 12A further includes a protective lens or shield 59 to at least partially protect the beam expanding optic. In some examples, the protective lens 59 is incorporated within the nozzle, but may also be removable from the nozzle. In some examples, the protective lens 59 further changes the output laser beam 42A, by collimating, expanding, and/or shaping the laser beam. The laser beam 42A with an expanded diameter can then be scanned in a desired pattern.

For instance, the control or scanning optic can be configured to control movement of the focal point of the output laser beam on the workpiece in X- or Y-directions in accordance with wobble commands. The control optic can receive the expanded laser output beam and then control movement of the expanded laser output beam on the workpiece.

Although the first and second lenses may be of a similar type, in some examples the first lens has a first power, first diameter, first thickness, or first index of refraction different from the second lens.

Although illustrated as the laser beam being provided from a center of the torch (e.g., via the nozzle 58) and the wire 36 provided at an angle (e.g., from an attached tube), in some examples the wire is provided from the center of the torch and the laser beam at an angle and/or from an attachment. Thus, in some examples, a conventional arc welding torch can be retrofit to use laser welding, whereas a laser welder without a wire feeding tube can be retrofit to receive a wire.

Operation of the wire (e.g., wire feed speed, etc.) and/or laser (e.g., power, scanning pattern, etc.) can be coordinated by the control circuitry 30 (e.g., dynamically and automatically in response to one or more sensor measurements), and/or be controlled by a user interface (e.g., a trigger, button, pedal, etc.). As welders hold a handheld laser tool with their hands, automating changes (e.g., in laser welding parameters, as disclosed herein) and/or coordination between wire feeding and laser application may benefit users. If manual control is desired, a button, trigger, pedal or other device can be used to control the introduction of the welding wire to the weld bead. This can result in a dabbing action or reciprocating motion, with a burst of welding wire advancing quickly for a short amount of time, and/or turning wire feeding on or off during a welding operation.

In some examples, adding or changing of one or more optics could create different beam widths and power outputs. By making them easy to change, add, and/or remove, an operator could use the same handheld laser welding torch for a broad number of applications (e.g., spot welding, seam welding, with added wire or autogenous, cleaning, cutting, etc.)

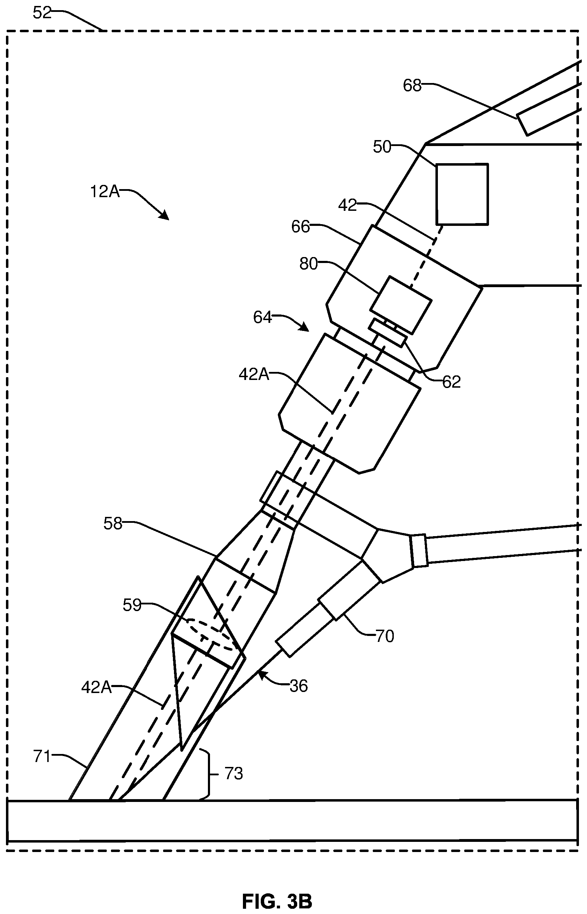

In some examples shown in FIG. 3B, handheld laser welding tool 12 includes a nozzle extension 71 to allow for defocusing of the laser beam on the workpiece. The example nozzle extension 71 can be mounted to the nozzle 58, secured by a fastener, weld, press-fit, or tooling. In some examples, the nozzle 58 is replaced with a nozzle that includes an extension. The nozzle extension 71 is configured to create a distance 73 between the tip of the welding torch nozzle and the workpiece 20. In some examples, the nozzle extension 71 is configured to contact the workpiece 20 and fix a position of the torch and/or nozzle relative to the workpiece, as disclosed herein. This fixed arrangement ensures spot welding can be performed for the needed duration, while focused within the predetermined area. A variety of nozzles sizes, types, or shapes could be provided, allowing for quick replacement and adjustment for a desired beam width or power.

In disclosed examples, the laser controller can receive instructions/commands (e.g., from an operator via the user interface 68, from a remote computer, automatically and/or in response to one or more conditions, etc.) to control the application of the laser beam to perform a spot weld in accordance with a weld schedule or weld profile (e.g., stored in memory associated with the laser controller and/or other control circuitry).

In some examples, the instructions/commands control one or more wobble variables, such as correlating to a desired spot size and/or penetration profile (and/or other possible target parameters). The wobble pattern variables are not limited to laser beam wobble patterns (e.g., geometric shapes), and may include power, beam width, and/or scanning speed, as disclosed herein.

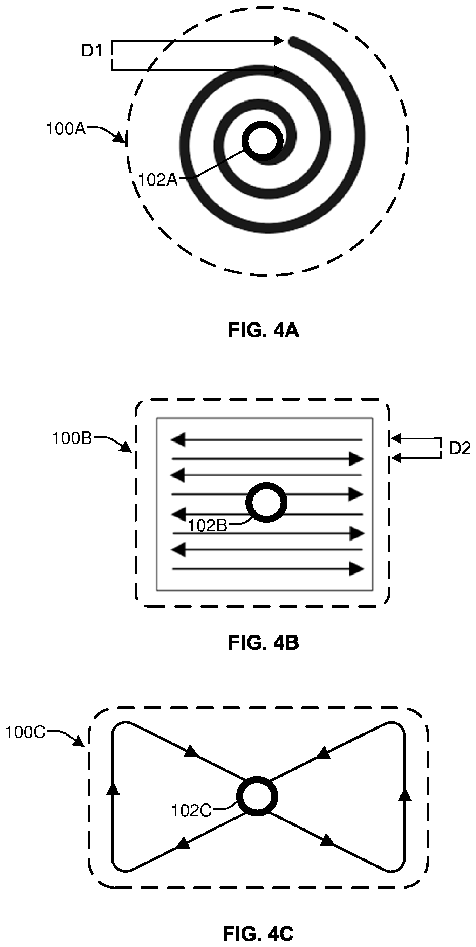

Application of multiple wobble patterns (e.g., oscillation, vibration, etc.) resulting from laser beam scanning movements across a workpiece are presented in example FIGS. 4A to 4C. For example, the handheld laser welding torch may be equipped with devices operable to generate movement (e.g., linear, rotational, randomized, patterned, etc.) as commanded by the laser controller during a welding operation. The pattern, frequency, direction, and/or magnitude of the wobbling of the laser beam can be provided by the laser controller 32, for instance.

The parameters of the wobble movements of the torch may be organized in a list, correlating laser beam wobble movements to desired patterns/spot welding outcomes (e.g., penetration depth for a specific workpiece, material, joint, etc.). The routines may be stored in a memory with the laser controller 32 and/or in a remote computing platform. In some examples, the correlation between the laser beam wobble is calculated and/or based on historical data (e.g., from data compiled during previous welding operations, based on operator selections). In some examples, a user can add and/or adjust parameters of one or more wobble routines (e.g., via user interface 68). In examples, the system automatically recognizes a connection to a particular component (e.g., wire type, nozzle extension, etc.) and sets a laser wobble command accordingly.

FIGS. 4A to 4C illustrate several example wobble patterns, as disclosed herein. A first wobble pattern shown in FIG. 4A represents a spiral pattern, revolving around a central, common or wobble axis 102A, within a predetermined area 100A. A second wobble pattern shown in FIG. 4B includes a number of straight lines, stacked within a predetermined area 100B. The lines are distributed about the wobble axis 102B. A third example wobble pattern shown in FIG. 4C represents a pseudo figure-8 pattern, with the laser beam crossing wobble axis 102C, within a predetermined area 100C.

As shown, the laser beam can be scanned across the area over multiple passes and/or by multiple laser beams. A distance D1 or D2 between first and second beam paths (e.g., for each previous and/or subsequent laser beams) may be varied to provide a desired set of weld characteristics. For example, a smaller distance between scans can increase heat in a given portion, while larger distances may decrease the heat profile.

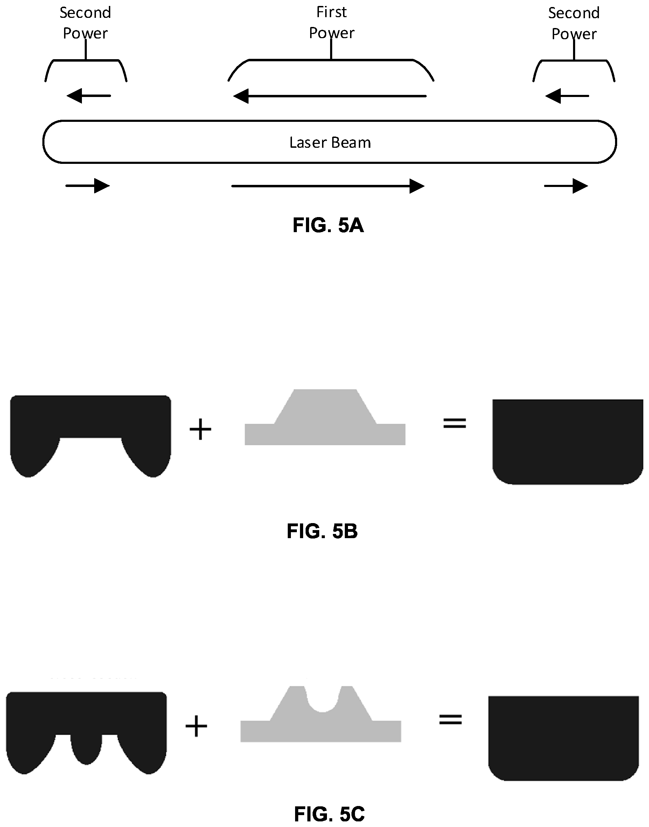

Additionally, or alternatively, a power and/or speed of the laser beam can be modified to support even heat distribution within the spot weld. As shown in FIG. 5A, at areas where the laser beam lingers (such as at a turnaround, e.g., at the ends of the straight lines shown in FIG. 4B), and/or crosses over a common spot (e.g., the wobble axis 102C of FIG. 4C), the power may be adjusted. Thus, areas where the laser beam is applied more often and/or more slowly can have less power applied.

In some examples, scanning control to compensate for laser power distribution is beneficial when the laser beam is scanning in one or two axis of motion (X-Y in a plane across a surface of the workpiece). For example, using two axis of laser beam motion (e.g., set at one constant power level) to traverse the area of a circle, the outer ring would have more penetration than the area just inside the ring. Also, the very center may have deeper penetration. FIGS. 5B and 5C illustrate profile views of example laser compensation applications, such as with first and second laser beams and/or wobble patterns being applied additively, to result in a fulsome and evenly distributed spot welding heat profile.

Although some of the provided examples are directed to handheld laser welding, the systems and techniques disclosed herein may be applied to any number of laser welding systems, such as robotic welding systems and/or collaborative robot (cobot) welding systems.

In some example, two or more laser beams can be applied to the workpiece. This can be achieved by guiding laser beams from two fiber optic cables to the workpiece and/or splitting a single laser beam into two separate beams. The two beams may be controlled differently, such as by the beam expanding optic disclosed herein, and/or via a laser scanning optic to control application of the laser beam on workpiece.

In some examples, the handheld laser welding tool may be used to build an object by additive manufacturing techniques. For instance, predetermined sets of laser welding parameters can be adjusted over time (e.g., during a laser welding operation, in response to historical data), and applied to control and/or optimize changes in a laser power as the laser is applied to various surfaces of the object. For instance, as additive manufacturing progresses, characteristics of the object change, such as temperature, size, smoothness, etc. The laser welding tool can monitor changes in the object characteristics and adjust application of the laser accordingly (e.g., laser power, scanning pattern, etc.). Changes may additionally or alternatively be controlled by a user input (via a user interface, as disclosed herein). This allows for fine and dynamic control of the additive manufacturing process.

As utilized herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y and z." As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, rearranged, and/or otherwise modified. Therefore, the present method and/or system are not limited to the particular implementations disclosed. Instead, the present method and/or system will include all implementations falling within the scope of the appended claims, both literally and under the doctrine of equivalents.

Various embodiments of the invention are specified in the following clauses.

Clause 1. A handheld laser welding torch, comprising:
a laser source to generate a laser beam to perform a spot weld;
a laser beam optic to apply the laser beam to a workpiece;
a nozzle, wherein the nozzle is in a fixed position relative to the workpiece during performance of the spot weld; and
a laser controller configured to control the laser beam to follow a pattern within a predetermined area on the workpiece about a wobble axis to distribute the heat from the laser beam within the predetermined area, wherein the pattern comprises focusing the laser beam at different locations within the predetermined area over a predetermined duration.

Clause 2. The handheld laser welding torch of clause 1, wherein the pattern includes a wobble pattern to scan the laser beam in one or more directions across the workpiece.

Clause 3. The handheld laser welding torch of clause 1, wherein the laser controller is further configured to control one or more variables of the laser beam.

Clause 4. The handheld laser welding torch of clause 3, wherein the one or more variables include power, beam width, distance between first and second beam paths, or scanning speed.

Clause 5. The handheld laser welding torch of clause 4, wherein the one or more variables are adjusted based on one or more characteristics of the workpiece including material type, thickness, or joint type.

Clause 6. The handheld laser welding torch of clause 1, wherein the pattern includes scanning multiple straight lines.

Clause 7. The handheld laser welding torch of clause 1, wherein the pattern includes scanning multiple arcuate lines.

Clause 8. A handheld laser welding torch, comprising:
a laser source to generate a laser beam to perform a spot weld;
a laser beam optic to apply the laser beam to a workpiece, wherein the handheld laser welding torch is in a fixed position relative to the workpiece during performance of the spot weld; and
a laser controller configured to:
   control a wobble pattern of the laser beam applied to the workpiece, wherein the wobble pattern overlaps at a first portion and does not overlap at a second portion; and
   control a power output profile of the laser beam, wherein the power output profile has a first power level at the first portion and a second power level a second portion.

Clause 9. The handheld laser welding torch of clause 8, wherein the wobble pattern is a straight line.

Clause 10. The handheld laser welding torch of clause 8, wherein the wobble pattern is one or more of a circle, an ellipse, a zigzag, a figure 8, a transverse reciprocating line, a crescent, a triangle, a square, a rectangle, a bracket shape, plus sign, carat, S-shape, $-shape, a non-linear pattern, an asymmetrical pattern, a pause, as a non-limiting list of examples, or any combination thereof.

Clause 11. The handheld laser welding torch of clause 8, further comprising a nozzle, wherein the nozzle is in a fixed position relative to the workpiece during performance of the spot weld.

Clause 12. The handheld laser welding torch of clause 8, further comprising a trigger, wherein a pull of the trigger initiates the spot weld.

Clause 13. The handheld laser welding torch of clause 8, wherein the spot weld is performed for a predetermined amount of time, the predetermined amount of time beginning at the initiation of the spot weld.

Clause 14. The handheld laser welding torch of clause 13, wherein the laser controller controls the laser beam to complete the wobble pattern within the predetermined amount of time.

Clause 15. A handheld laser welding torch, comprising:
a laser source to generate a laser beam to perform a spot weld;
a laser beam optic to apply the laser beam to a workpiece, wherein the handheld laser welding torch is in a fixed position relative to the workpiece during performance of the spot weld; and
a laser controller configured to:
   control a wobble pattern of the laser beam applied to the workpiece, wherein the wobble pattern comprises a first portion corresponding to a first scanning speed and a second portion corresponding to a second scanning speed; and
   control a power output profile of the laser beam, wherein the power output profile has a first power level at the first portion and a second power level a second portion.

Clause 16. The handheld laser welding torch of clause 15, wherein the laser controller comprises a mirror or galvanometer to control application of the focal on the workpiece in X- or Y-directions in accordance with wobble commands.

Clause 17. The handheld laser welding torch of clause 16, further comprising a user interface to receive the wobble commands to control the frequency or magnitude of the wobble pattern of the laser beam.

Clause 18. The handheld laser welding torch of clause 17, wherein the user interface provides a list of wobble variables or wobble patterns corresponding to the spot weld.

Clause 19. A handheld laser welding torch, comprising:
a laser source to generate a laser beam to perform a spot weld;
a laser beam optic to apply the laser beam to a workpiece;
a nozzle extension, wherein the nozzle extension is in a fixed position relative to the workpiece during performance of the spot weld and
a laser controller configured to:
   control a wobble pattern of the laser beam applied to the workpiece, wherein the wobble pattern comprises a first portion corresponding to a first scanning speed and a second portion corresponding to a second scanning speed; and
   control a power output profile of the laser beam, wherein the power output profile has a first power level at the first portion and a second power level a second portion.

Clause 20. The handheld laser welding torch of clause 19, wherein the nozzle extension is configured to be secured to a nozzle of the handheld laser welding torch to change a distance between the nozzle and the workpiece.

Clause 21. The handheld laser welding torch of clause 19, wherein the distance causes a focal spot of the laser beam to change focus.

Clause 22. The handheld laser welding torch of clause 21, wherein the laser controller is further configured to adjust the power output of the laser beam based on the distance or the focus of the focal spot of the laser beam.

Clause 23. The handheld laser welding torch of clause 19, wherein the laser controller adjusts one or more variables of the pattern based on a shape, size, or type of nozzle extension.

## Claims

1. A handheld laser welding torch, comprising:
a laser source to generate a laser beam to perform a spot weld;
a laser beam optic to apply the laser beam to a workpiece;
a nozzle, wherein the nozzle is in a fixed position relative to the workpiece during performance of the spot weld; and
a laser controller configured to control the laser beam to follow a pattern within a predetermined area on the workpiece about a wobble axis to distribute the heat from the laser beam within the predetermined area, wherein the pattern comprises focusing the laser beam at different locations within the predetermined area over a predetermined duration.

2. The handheld laser welding torch of claim 1, wherein the pattern includes a wobble pattern to scan the laser beam in one or more directions across the workpiece.

3. The handheld laser welding torch of claim 1, wherein the laser controller is further configured to control one or more variables of the laser beam, optionally the one or more variables include power, beam width, distance between first and second beam paths, or scanning speed, and optionally the one or more variables are adjusted based on one or more characteristics of the workpiece including material type, thickness, or joint type.

4. The handheld laser welding torch of claim 1, wherein the pattern includes scanning multiple straight lines.

5. The handheld laser welding torch of claim 1, wherein the pattern includes scanning multiple arcuate lines.

6. A handheld laser welding torch, comprising:
a laser source to generate a laser beam to perform a spot weld;
a laser beam optic to apply the laser beam to a workpiece, wherein the handheld laser welding torch is in a fixed position relative to the workpiece during performance of the spot weld; and
a laser controller configured to:
control a wobble pattern of the laser beam applied to the workpiece, wherein the wobble pattern overlaps at a first portion and does not overlap at a second portion; and
control a power output profile of the laser beam, wherein the power output profile has a first power level at the first portion and a second power level a second portion.

7. The handheld laser welding torch of claim 6, wherein the wobble pattern is :
- a straight line, or
- one or more of a circle, an ellipse, a zigzag, a figure 8, a transverse reciprocating line, a crescent, a triangle, a square, a rectangle, a bracket shape, plus sign, carat, S-shape, $-shape, a non-linear pattern, an asymmetrical pattern, a pause, as a non-limiting list of examples, or any combination thereof.

8. The handheld laser welding torch of claim 6, further comprising:
- a nozzle, wherein the nozzle is in a fixed position relative to the workpiece during performance of the spot weld, and/or
- a trigger, wherein a pull of the trigger initiates the spot weld.

9. The handheld laser welding torch of claim 6, wherein the spot weld is performed for a predetermined amount of time, the predetermined amount of time beginning at the initiation of the spot weld, and optionally the laser controller controls the laser beam to complete the wobble pattern within the predetermined amount of time.

10. A handheld laser welding torch, comprising:
a laser source to generate a laser beam to perform a spot weld;
a laser beam optic to apply the laser beam to a workpiece, wherein the handheld laser welding torch is in a fixed position relative to the workpiece during performance of the spot weld; and
a laser controller configured to:
control a wobble pattern of the laser beam applied to the workpiece, wherein the wobble pattern comprises a first portion corresponding to a first scanning speed and a second portion corresponding to a second scanning speed; and
control a power output profile of the laser beam, wherein the power output profile has a first power level at the first portion and a second power level a second portion.

11. The handheld laser welding torch of claim 10, wherein the laser controller comprises a mirror or galvanometer to control application of the focal on the workpiece in X- or Y-directions in accordance with wobble commands, optionally further comprising a user interface to receive the wobble commands to control the frequency or magnitude of the wobble pattern of the laser beam, and optionally the user interface provides a list of wobble variables or wobble patterns corresponding to the spot weld..

12. A handheld laser welding torch, comprising:
a laser source to generate a laser beam to perform a spot weld;
a laser beam optic to apply the laser beam to a workpiece;
a nozzle extension, wherein the nozzle extension is in a fixed position relative to the workpiece during performance of the spot weld and
a laser controller configured to:
control a wobble pattern of the laser beam applied to the workpiece, wherein the wobble pattern comprises a first portion corresponding to a first scanning speed and a second portion corresponding to a second scanning speed; and
control a power output profile of the laser beam, wherein the power output profile has a first power level at the first portion and a second power level a second portion.

13. The handheld laser welding torch of claim 12, wherein the nozzle extension is configured to be secured to a nozzle of the handheld laser welding torch to change a distance between the nozzle and the workpiece.

14. The handheld laser welding torch of claim 12, wherein the distance causes a focal spot of the laser beam to change focus, and optionally the laser controller is further configured to adjust the power output of the laser beam based on the distance or the focus of the focal spot of the laser beam.

15. The handheld laser welding torch of claim 12, wherein the laser controller adjusts one or more variables of the pattern based on a shape, size, or type of nozzle extension.
